# EUROPEAN PATENT SPECIFICATION

(11) **EP 3 051 092 B1**
(45) Date of publication and mention of the grant of the patent: **28.03.2018**
(21) Application number: 15153110.0
(22) Date of filing: 29.01.2015
(51) Int. Cl.: F01P 3/16, F02B 19/10, F02F 1/40

(54) **COOLING OF PRE-CHAMBER IN INTERNAL COMBUSTION ENGINE**
KÜHLUNG DER VORKAMMER IN EINEM VERBRENNUNGSMOTOR
REFROIDISSEMENT DE PRÉCHAMBRE POUR MOTEUR À COMBUSTION INTERNE

(43) Date of publication of application: 03.08.2016
(73) Proprietor: Caterpillar Energy Solutions GmbH, 68167 Mannheim (DE)
(72) Inventor: Schelle, Jörg, 68167 Mannheim (DE)
(74) Representative: BRP Renaud & Partner mbB Rechtsanwälte Patentanwälte Steuerberater

(56) References cited:
- US-A- 6 019 081
- US-A1- 2011 146 618
- US-A1- 2012 325 179
- US-A1- 2014 209 057

## Description

### Technical Field

The present disclosure generally relates to internal combustion engines with pre-combustion chamber based ignition devices and in particular to cooling pre-chambers of based those devices.

### Background

Internal combustion engines operated at least in part on gaseous fuel can employ pre-combustion chamber based ignition devices to ignite a mixture of gaseous fuel and charge air within a main combustion chamber of the engine. The ignition device usually is mounted within a cylinder head that covers a main combustion chamber. The ignition device is usually configured as a pre-combustion chamber assembly including a pre-combustion chamber and an ignition unit such as a spark plug or a laser igniter. The pre-combustion chamber assembly further includes a fuel supply for supplying some amount of fuel into the pre-combustion chamber and forming an ignition mixture therein. Upon ignition of the ignition mixture within the pre-combustion chamber, ignition jets may advance through through hole provided within a wall section of the pre-combustion chamber that reaches into the main combustion chamber. There, those ignition jets ignite flame-like the mixture of gaseous fuel and charge air.

The heat generated during the pre-combustion as well as during the main combustion also heats up the pre-combustion chamber. Therefore, the pre-combustion chamber usually is cooled via a cooling channel system provided within the cylinder head.

Exemplary embodiments of pre-combustion chamber walls are disclosed, for example, in US 6 019 081 A and US 2012/0325179 A1. Moreover, US 2011/0146618 A1 discloses a cooling channel fluidly coupled to a head cooling passage that is defined in the outer surface of a pre-combustion device. The cooling channel supports the definition of a cooling jacket extending around an end of the pre-combustion device.

The present disclosure is directed, at least in part, to improving or overcoming one or more aspects of prior systems.

### Summary of the Disclosure

In an aspect, a pre-combustion chamber unit of a pre-combustion chamber assembly for igniting an internal combustion engine operable at least partly on gaseous fuel is disclosed. The pre-combustion chamber unit has a hollow shape elongated along a longitudinal axis for providing a pre-combustion chamber. The pre-combustion chamber unit comprises a pre-combustion chamber wall delimiting the pre-combustion chamber. The pre-combustion chamber wall comprises a main section at least partly surrounding an ignition portion of the pre-combustion chamber, a tip section forming a pre-combustion chamber tip section of the pre-combustion chamber assembly, and a seal section in-between the tip section and the main section for providing a seal region in the mounted state. The main section comprises an external fluid guiding surface circumferentially extending around the longitudinal axis and being curved along and towards the longitudinal axis for smoothly redirecting a cooling fluid and the external fluid guiding surface is configured as a circumferential recess around the longitudinal axis, the recess comprising a curvature that on an ignition side and/or an injection side reverses, thereby forming an S-like transition at the ignition side and/or the injection side, thereby forming a smooth flow of a cooling fluid in the direction of the longitudinal axis.

In another aspect, a cylinder head for an internal combustion engine operable at least partly on gaseous fuel is disclosed. The cylinder head comprises a mounting bore for mounting an elongated pre-combustion chamber assembly that extends along a longitudinal axis such that a mounting section of the pre-combustion chamber assembly is positioned at an outer top surface of the cylinder head and a pre-combustion chamber tip section of the pre-combustion chamber assembly is positioned at a combustion chamber face of the cylinder head. The mounting bore conprises in axial direction a sequence of: a tip bore section extending from combustion chamber face for receiving the pre-combustion chamber tip section, a first cooling section wider in lateral direction than the tip bore section for forming a pre-combustion chamber cooling ring, a second cooling section providing a cooling chamber directly contacting an igniter section of the pre-combustion chamber assembly, and a main mounting section for receiving the mounting section of the pre-combustion chamber assembly. At least one cooling channel fluidly connected to the a pre-combustion chamber cooling ring via a bulb-like chamber forms a ridge section between an elongation of the cooling channel and the tip bore section, and the ridge section comprises a curved surface facing the cooling channel.

The herein disclosed concepts may allow cooling of the pre-chamber in a uniform manner over a large area. In addition, the temperature of the walls may be decreased in critical areas.

In some embodiments, the pre-chamber is cooled via cooling water directed towards the pre-chamber by a certain number of bores. The water stream, which is released from the bores, may hit a circular cooling channel formed to surround the pre-chamber and having a preset contour. The deflecting shape may be specifically selected in its circular contour at the pre-chamber to increase, for example, turbulences. This may allow increasing the heat transfer. The specific contour may further allow a reduced thickness of the wall in the region of the cooling channel, thereby further decreasing the cooling performance and reducing the temperature of the wall. As will be apparent to the skilled person, a compromise between the durability and thickness of the wall will result depending on the respective boundary conditions.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic cross-sectional view of an internal combustion engine with a pre-combustion chamber based ignition device installed in a cylinder head of the internal combustion engine;
Fig. 2 shows a schematic cross-sectional view of a central part of an exemplary cylinder head with a pre-combustion chamber based ignition device in a first cooling configuration;
Fig. 3 shows a schematic cross-sectional view of a section of a cylinder head around the pre-combustion chamber of Fig. 2; and
Fig. 4 shows a schematic cross-sectional view of a section of a cylinder head around a pre-combustion chamber in a second cooling configuration; and
Fig. 5 shows a schematic cross-sectional view of the section of Fig. 4 under a slightly tilted observation angle.

### Detailed Description

The following is a detailed description of exemplary embodiments of the present disclosure. The exemplary embodiment described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that smoothly redirecting a coolant when flowing onto a pre-combustion chamber wall may improve cooling performance. In particular, when a flow of the coolant can be generated that extends and passes through at least most of the volume provided by the cooling system.

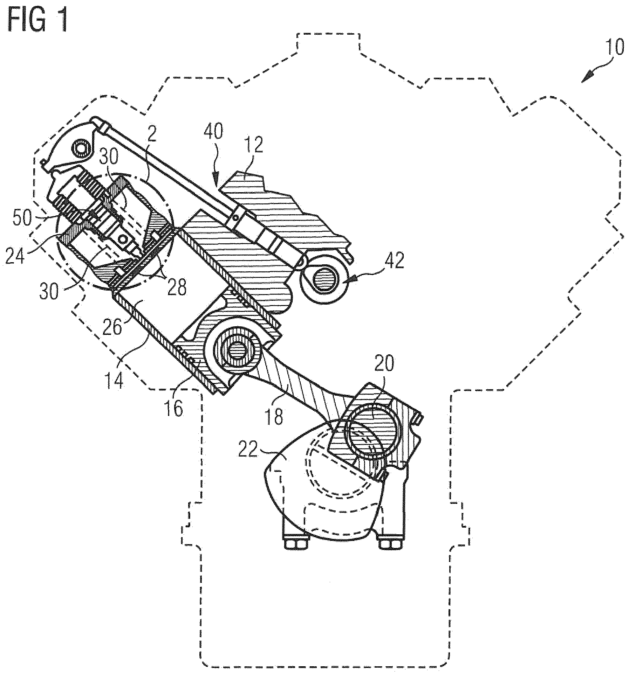

Referring to the drawings, exemplary embodiments are disclosed that illustrate the herein disclosed cooling concepts that can be employed, for example, in the internal combustion engine of Fig. 1.

Specifically, in Fig. 1 an exemplary embodiment of an internal combustion engine 10 is illustrated that uses a pre-combustion chamber assembly for ignition. Engine 10 may include features not shown, such as a fuel system, an air system, a cooling system, drivetrain components, etc. For the purpose of the present disclosure, engine 10 is exemplarily considered a four-stroke gaseous fuel internal combustion engine . One skilled in the art will recognize, however, that engine 10 may be any type of engine (two-stroke, turbine, gas, diesel, natural gas, propane, etc.) that would utilize a pre-combustion chamber based ignition. Furthermore, engine 10 may be of any size, with any number of cylinders, and in any configuration ("V", in-line, radial, etc.). Engine 10 may be used to power any machine or other device, including locomotive applications, on-highway trucks or vehicles, off-highway trucks or machines, earth moving equipment, generators, aerospace applications, marine applications, pumps, stationary equipment, or other engine powered applications.

Engine 10 includes an engine block 12 having a plurality of cylinder units 14 (one of which is illustrated in Fig. 1). A piston 16 is slidably disposed within cylinder unit (e.g. within a cylinder liner) to reciprocate between a top-dead-center position and a bottom-dead-center position. A connecting rod 18 connects piston 16 to an eccentric crankpin 20 of a crankshaft 22 such that reciprocating motion of the piston results in rotation of the crankshaft 22.

Engine 10 also includes a cylinder head 24 (enlarged in Fig. 1) that is mounted to engine block 12 and covers cylinder unit 14, thereby delimiting a main combustion chamber 26. Cylinder head 24 provides intake and exhaust openings 28 to charge main combustion chamber 26, for example, with a charge air-gaseous fuel mixture and to release gases out of main combustion chamber 26 into an exhaust gas system (not shown). Engine valves 30 are positioned to selectively open and close openings 28. Each cylinder unit 14 may include multiple intake and exhaust openings 28.

Engine 10 includes further valve actuation assemblies 40 (one of which is illustrated in Fig. 1 to be connected and driven by a camshaft 42).

Engine 10 further includes a pre-combustion chamber assembly 50 (also referred to as pre-combustion chamber ignition device), which is positioned within cylinder head 24, for example between valves 30. Pre-combustion chamber assembly 50 may be configured in a variety of ways. In general, it is an assembly configured to initiate a combustion event within a pre-combustion chamber, and to direct the combustion into main combustion chamber 26.

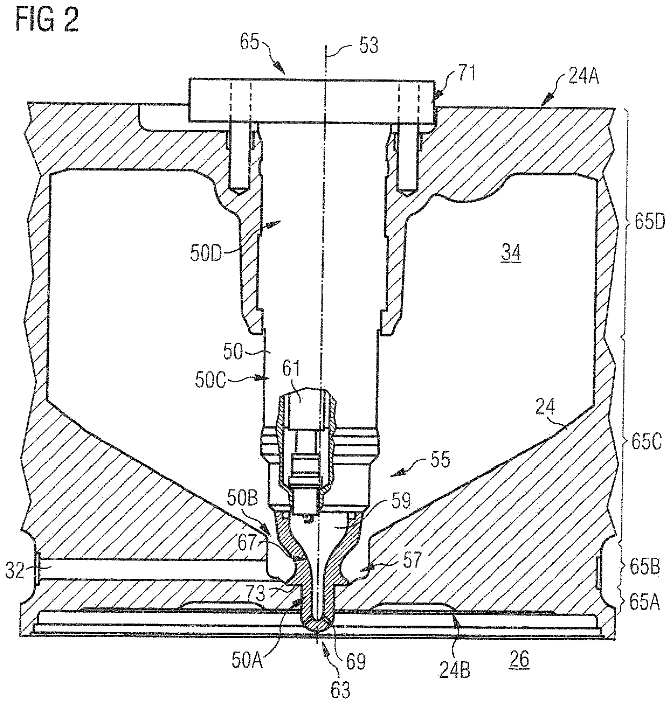

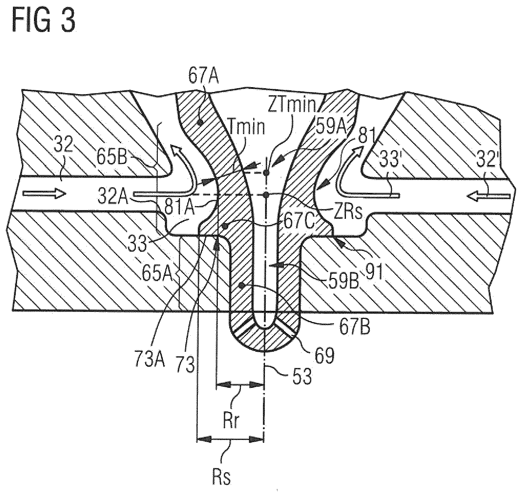

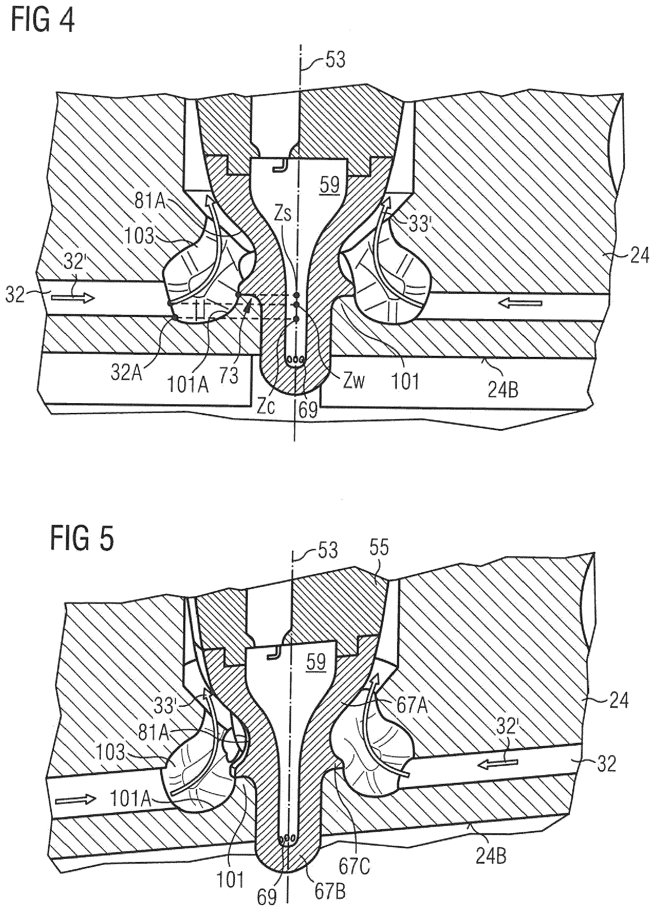

In connection with the Figs. 2 to 5, exemplary embodiments of cooling configurations and respective pre-chamber configurations are described that, for example, may be used in engine 10 of Fig. 1. Fig. 2 illustrates in connection with an exemplary mounting configuration of an ignition injector the cooling concept. Fig. 3 shows a respective first embodiment in more detail. Figs. 4 and 5 illustrate a second embodiment. In the description of the following figures, previously introduced reference numerals are used for identical parts and the respective description disclosed herein are similarly applicable to those components as will be apparent to the skilled person.

With reference to Fig. 2, pre-combustion chamber assembly 50 extends along a longitudinal axis 53 that extend through cylinder head 24 into main combustion chamber 26. Usually, longitudinal axis 53 coincides with the central symmetry axis of cylinder unit 14. Pre-combustion chamber assembly 50 comprises a main unit 55 and a pre-combustion chamber unit 57 forming essentially a pre-combustion chamber 59 there-between.

In general, main unit 55 is mountable to pre-combustion chamber unit 57 at a mounting section 50D via, for instance, welding, soldering, screwing, bolting, form-fitting, or any other suitable fixing means.

Pre-combustion chamber unit 57 may be detachably mounted to the main unit 55, thereby allowing replacement of a defect pre-combustion chamber unit by a new pre-combustion chamber unit in the case of, for example, wear of the pre-combustion chamber unit due to overheating. In particular, pre-combustion chamber unit 57 includes a section that reaches into main combustion chamber 26 (as described below in more detail) and, therefore is subject to the extensive heat generated therein.

In general, an igniter section 50C of main unit 55 may be directly contactable by cooling fluid passing, for example, through a cooling chamber 34 within cylinder head 24.

In igniter section 50C, main unit 55 may accommodate heat generating elements such as a spark plug 61 (or any other type of ignition source such as a laser igniter etc.). In Fig. 2, as an example ignition concept, an ignition end such as a sparking end of spark plug 61 protrudes into pre-combustion chamber 59.

Main unit 55 may further include a fuel supply channel (not shown) fluidly connecting pre-combustion chamber 59 with a fuel system (not shown) including, for example, a fuel reservoir, fuel pumps, control valves, and additional elements configured to provide fuel, for example gaseous or liquid fuel, to pre-combustion chamber 59.

Pre-combustion chamber unit 57 may be casted to its general configuration and subsequently machined to final dimensions where required. In some embodiments, pre-combustion chamber unit 57 may be machined out of a solid material block. In some further embodiments, the pre-combustion chamber unit 57 may be sintered, or manufactured in any other suitable way known in the art.

In general, pre-combustion chamber 59 may be divided into a conical-like shaped pre-combustion chamber section 50B and a cylinder-like shaped lower pre-combustion chamber section 50A. At the latter, pre-combustion chamber unit 57 includes a pre-combustion chamber tip section 63.

Cylinder head 24 comprises a mounting bore 65 for mounting pre-combustion chamber assembly 50.

Mounting bore 65 comprises a tip bore section 65A next to a combustion chamber face 24B of cylinder head 24, which relates to cylinder-like shaped lower pre-combustion chamber section 50A. In the mounted state, pre-combustion chamber tip section 63 is positioned at combustion chamber face 24B and may at least partially protrude into main combustion chamber 26 through tip bore section 65A provided in cylinder head 24.

Mounting bore 65 further comprises a first cooling section 65B wider in lateral direction than tip bore section 65A for forming a pre-combustion chamber cooling ring 33 of a cooling system (described in more detail below) and a second cooling section 65C as a part of cooling chamber 34 for directly cooling igniter section 50C of pre-combustion chamber assembly 50.

Mounting bore 65 further comprises a main mounting section 65D for receiving mounting section 50D of pre-combustion chamber assembly 50.

Main unit 55 and pre-combustion chamber unit 57 may define together pre-combustion chamber 59. Particularly, pre-combustion chamber unit 57 comprises a main portion of a pre-combustion chamber wall 67 delimiting pre-combustion chamber 59 radially and at pre-combustion chamber tip section 63. In the exemplary configuration of Fig. 2, main unit 55 delimits pre-combustion chamber 59 at its ignition side (i.e. in Fig. 2 opposite to pre-combustion chamber tip section 63).

Pre-combustion chamber tip section 63 has a substantially dome-like shape and includes a plurality of spaced apart, radially oriented through holes 69. The plurality of through holes 69 fluidly connects pre-combustion chamber 59 and main combustion chamber 26. Prior ignition, the charge air-gaseous fuel mixture is pushed into pre-combustion chamber 59 through through holes 69. During ignition, through holes 69 direct the pre-combustion from within pre-combustion chamber 59 in a predetermined pattern into main combustion chamber 26. For example, a burning air/fuel mixture is injected into main combustion chamber 26.

As further illustrated in Fig. 2, main unit 55 is mounted to an outer top surface 24A of cylinder head 24 via a fastening device 71, for example, screws. In the assembled state, fastening device 71 presses pre-combustion chamber assembly 50 towards main combustion chamber 26 such that a seal region 73 within cylinder head 24 forms a fluid tight seal between any structural configurations such as a cooling system within cylinder head 24 and main combustion chamber 26.

Specifically, in Fig. 2 a cooling system comprises radial cooling channels such as cooling channel 32 as well as central cooling chambers such as cooling chamber 34. Cooling channel 32 and cooling chamber 34 are accordingly part of a cooling circuit through which a cooling fluid is pumped. As it is apparent to the skilled person, seal region 73 is configured to prevent any leakage between those cooling channels and main combustion chamber 26.

Fig. 3 shows a cross-section within the region of cylinder-like shaped lower pre-combustion chamber section 50A and conical-like shaped pre-combustion chamber section 50B. Correspondingly, also sections of tip bore section 65A and first cooling section 65B of cylinder head 24 are shown.

Specifically, Fig. 3 shows pre-combustion chamber unit 57 having a hollow shape that is elongated along longitudinal axis 53. The hollow shape forms pre-combustion chamber 59, which is delimited by a pre-combustion chamber wall 67.

Pre-combustion chamber wall 67 comprises a main section 67A, which at least partly surrounds an ignition portion 59A of pre-combustion chamber 59.

Pre-combustion chamber wall 67 further comprises a tip section 67B forming in particular pre-combustion chamber tip section 63 of pre-combustion chamber assembly 50. Tip section 67B surrounds an injection portion 59B of pre-combustion chamber 59 and comprises through holes 69.

Furthermore, pre-combustion chamber wall 67 comprises a seal section 67C between main section 67A and tip section 67B. Seal section 67C provides a seal region 73 in the mounted state that separates the outside around tip section 67B from, for example, any cooling fluid being present in the outside of main section 67A.

Main section 67A comprises a recess 81 extending around longitudinal axis 53 next to seal region 73. Recess 81 includes an external fluid guiding surface 81A that circumferentially extends around longitudinal axis 53 and is curved for smoothly redirecting a cooling fluid that, for example, is guided along cooling channel 32 onto main section 67A. External fluid guiding surface 81A is smoothly curved along longitudinal axis 53.

The outer surface of pre-combustion chamber unit 57 may further be configured such that recess 81 comprises a curvature that, on an ignition side and/or an injection side, reverses such that an S-like transition at the ignition side and/or the injection side, respectively, is formed. Accordingly, a smooth flow of a cooling fluid in the direction of longitudinal axis 53 may be achieved.

For example, a curvature of external fluid guiding surface 81A may be defined in the cross-section by a sequence of radii with their center point radially outside. The radii may increase in size with increasing distance from seal section 67C and are selected and positioned in the center point such that they transit smoothly into each other.

Seal section 67C may be configured as a flange-like structure that is partly formed by main section 67A and seal section 67C.

For example, seal section 67C may extend radially from the longitudinal axis 53 up to an outer sealing radius Rs and recess 81 may extend down to a lower recess radius Rr. As shown in Fig. 3, lower recess radius Rr is smaller than the outer sealing radius Rs. In particular, seal section 67C may comprise a radially extending ring-shaped sealing face 73A, which in particular may extend up to outer sealing radius Rs or at least over an area providing sufficient sealing in the mounted state.

As further shown in Fig. 3, an axial position C_{Tmin} of a minimum wall thickness Tmin of main section 67A is axially displaced along a longitudinal axis with respect to an axial position Z_{Rr} of lower recess radius Rr. For example, minimum wall thickness Tmin is displaced towards a region of a larger inner diameter of ignition portion 59A of pre-combustion chamber 59.

In the exemplary embodiment of Fig. 3, pre-combustion chamber tip section 63 reaches in the mounted state into main combustion chamber 26 (but this may not be necessary).

With respect to an exemplary flow of cooling liquid, an arrow 32' indicates the flow within cooling channel 32 while an arrow 33' indicates the deflection of flow of the cooling liquid within cooling ring 33. The deflection of the flow may be performed in a smooth manner due to the specifically curved shape of external fluid guiding surface 81A. Thereby, the formation of swirls may be reduced, and the cooling performance within main section 67A may be improved.

As shown in Fig. 3, channel 32 is farther away from combustion chamber face 24B than seal region 73. Accordingly, a step-like structure opens from channel 32 into cooling ring 33 at opening 32A. The step-like structure in combination with the curvature allows a smooth flow of cooling liquid after entering the cooling periphery also in this respect.

Furthermore, the stepwise opening results in a counter-sealing face 91 provided next to tip bore section 65A of mounting bore 65. Counter-sealing face 91 and sealing face 73A are configured to provide sufficient sealing between combustion chamber 26 and, for example, the cooling system, thereby forming seal region 73 in the mounted state.

In Fig. 3, exemplarily two cooling channels 32 are shown coming in from a radial direction for inparticular cooling the wall delimited by combustion chamber face 24B. However, in general any number of suitable cooling channels may be provided and their directionality may be radially, at least partially radially or at any suitable direction. Usually, cooling channels 32 will be provided in a symmetric manner, however, any other type of specifically selected asymmetric shape may be provided as well.

The configuration of cooling channel 32 and external fluid guiding surface 81A in Fig. 3 results in a deflection of cooling fluid through cooling ring 33 into cooling chamber 34 (see Fig. 2).

Figs. 4 and 5 illustrate a slightly modified configuration, whereby reference numerals of essentially identical parts were maintained.

One difference with respect to the embodiment shown in Fig. 3, is the distance between cooling channel 32 and combustion chamber face 24B. In particular, the distance is smaller than the distance of seal region 73 from combustion chamber face 24B. In consequence, cooling channel 32 faces at least partly a ridge section 101 that is formed between an elongation of cooling channel 32 and tip bore section 65A. Accordingly, cooling channel 32 is at most partly directed towards pre-combustion chamber cooling ring 33 such that a bulb-like chamber 103 is provided through which cooling channel 32 connects to pre-combustion chamber cooling ring 33. Accordingly, such bulb-like chamber 103 is provided for each cooling channel 32 having the respective distance to combustion chamber face 24B.

Ridge section 101 comprises a curved surface 101A facing cooling channel 32. The curved surface is shaped to extend smoothly into a surface section of external fluid guiding surface 81A, wherein the flange-like structure of the seal section may form a small intermediary step there-between. Thereby, cooling fluid flowing along cooling channel 32 as indicated by arrow 32' into bulb-like chamber 103 is smoothly deviated and guided around and along pre-combustion chamber unit 57.

In other words, circumferential counter-sealing face 91, which is provided at the transition between tip bore section 65A and first cooling section 65B, is positioned at an axial position Zs that is farther away from combustion chamber face 24B than an axial position Zc of a center of opening 32A and in particular farther away than an axial position Zw of a wall section of opening 32A being the closest to combustion chamber face 24B.

In the embodiment shown in Figs. 4 and 5, accordingly, a part of the deflection of the cooling liquid is performed by a section of the face of ridge section 101. Ridge section 101 may, for example, be already provided in the cast shape of cylinder head 24.

### Industrial Applicability

The herein disclosed concepts may be used, for example, in gas engines manufactured by Caterpillar Energy Solutions GmbH.

In general, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

Although the preferred embodiments of this invention have been described herein, improvements and modifications may be incorporated without departing from the scope of the following claims.

## Claims

1. A pre-combustion chamber unit (57) of a pre-combustion chamber assembly (50) for igniting an internal combustion engine (10) operable at least partly on gaseous fuel, wherein the pre-combustion chamber unit (57) has a hollow shape elongated along a longitudinal axis (53) for providing a pre-combustion chamber (59), and comprises:
a pre-combustion chamber wall (67) delimiting the pre-combustion chamber (59), the pre-combustion chamber wall (67) comprising
a main section (67A) at least partly surrounding an ignition portion (59A) of the pre-combustion chamber (59),
a tip section (67B) forming a pre-combustion chamber tip section (63) of the pre-combustion chamber assembly (50), and
a seal section (67C) in-between the tip section (67B) and the main section (67A) for providing a seal region (73) in the mounted state,
wherein the main section (67A) comprises
an external fluid guiding surface (81A) circumferentially extending around the longitudinal axis (53) and being curved along and towards the longitudinal axis (53) for smoothly redirecting a cooling fluid, **characterised in that** the external fluid guiding surface (81A) is configured as a circumferential recess (81) around the longitudinal axis (53), the recess (81) comprising a curvature that on an ignition side and/or an injection side reverses, thereby forming an S-like transition at the ignition side and/or the injection side, thereby forming a smooth flow of a cooling fluid in the direction of the longitudinal axis (53).

2. The pre-combustion chamber unit (57) of any one of claim 1, wherein the seal section (67C) extends radially from the longitudinal axis (53) up to an outer sealing radius (Rs) and the recess (81) extends down to a lower recess radius (Rr) that is smaller than the outer sealing radius (Rs).

3. The pre-combustion chamber unit (57) of claim 1 or claim 2, wherein in particular the seal section (67C) comprises a radially extending ring-shaped sealing face (73A).

4. The pre-combustion chamber unit (57) of any one of claim 1 to claim 3, wherein an axial position (Z_{Tmin}) of a minimum wall thickness (Tmin) of the main section (67A) is axially displaced along the longitudinal axis (53) with respect to an axial position (Z_{Rr}) of the lower recess radius (Rr), in particular towards a region of a larger diameter of the ignition portion (59A) of the pre-combustion chamber (59).

5. The pre-combustion chamber unit (57) of any one of the preceding claims, wherein a curvature of the external fluid guiding surface (81A) is defined by a sequence of radii that transition into each other and increase in size with increasing distance from the seal section (67C).

6. The pre-combustion chamber unit (57) of any one of the preceding claims, wherein the seal section (67C) is provided by a flange-like structure formed by the main section (67A) and the seal section (67C).

7. The pre-combustion chamber unit (57) of any one of the preceding claims, wherein the pre-combustion chamber tip section (63) of the pre-combustion chamber assembly (50) at least partly surrounds an injection portion (59B) of the pre-combustion chamber (59) and comprises through holes (69) for fluidly connecting the injection portion (59B) of the pre-combustion chamber with a main combustion chamber (26).

8. A cylinder head (24) for an internal combustion engine (10) operable at least partly on gaseous fuel, the cylinder head (24) comprising:
a mounting bore (65) for mounting an elongated pre-combustion chamber assembly (50) that extends along a longitudinal axis (53) such that a mounting section (50D) of the pre-combustion chamber assembly (50) is positioned at an outer top surface (24A) of the cylinder head (24) and a pre-combustion chamber tip section (63) of the pre-combustion chamber assembly (50) is positioned at a combustion chamber face (24B) of the cylinder head (24), the mounting bore (65) comprising, in axial direction a sequence of:
a tip bore section (65A) extending from combustion chamber face (24B) for receiving the pre-combustion chamber tip section (63),
a first cooling section (65B) wider in lateral direction than the tip bore section (65A) for forming a pre-combustion chamber cooling ring (33),
a second cooling section (65C) providing a cooling chamber (34) directly contacting an igniter section (50C) of the pre-combustion chamber assembly (50), and
a main mounting section (65D) for receiving the mounting section (50D) of the pre-combustion chamber assembly (₅₀), **characterised in** at least one cooling channel (32) fluidly connected to the pre-combustion chamber cooling ring (33) via a bulb-like chamber (103) forming a ridge section (101) between an elongation of the cooling channel (32) and the tip bore section (65A),
wherein the ridge section (101) comprises a curved surface (101A) facing the cooling channel (32).

9. The cylinder head (24) of claim 9, wherein the curved surface (101A) facing the cooling channel (32) is curved along and towards the longitudinal axis (53) for smoothly redirecting a cooling fluid and
wherein in particular the curved surface (101A) extends, for example when a pre-combustion chamber assembly (50) with a pre-combustion chamber unit (57) according to any one of claim 1 to claim 9 is mounted, into the external fluid guiding surface (81A) of the pre-combustion chamber wall (67), in particular such that the curved surface (101A) and an external fluid guiding surface (81A) of the pre-combustion chamber unit together smoothly redirect the cooling fluid.

10. The cylinder head (24) of claim 8 or claim 9, wherein a circumferential counter-sealing face (91) is provided at the transition between the tip bore section (65A) and the first cooling section (65B), the counter-sealing face (91) being positioned at an axial position (Zs) that is further away from combustion chamber face (24B) than an axial position (Zc) of the center of the opening (32A) and in particular than an axial position (Zw) of a wall section of the opening (32A) being the closest to the combustion chamber face (24B).

11. A cylinder head unit comprising:
a pre-combustion chamber assembly (50) with a pre-combustion chamber unit (57) according to any one of claim 1 to claim 7; and
a cylinder head (24) according to any one of claim 8 to claim 10 or
a cylinder head (24) for an internal combustion engine (10) at least partly operable on gaseous fuel, the cylinder head (24) comprising:
a mounting bore (65) for mounting an elongated pre-combustion chamber assembly (50) that extends along a longitudinal axis (53) such that a mounting section (50D) of the pre-combustion chamber assembly (50) is positioned at an outer top surface (24A) of the cylinder head (24) and a pre-combustion chamber tip section (63) of the pre-combustion chamber assembly (50) is positioned at a combustion chamber face (24B) of the cylinder head (24), the mounting bore (65) comprising, in axial direction a sequence of:
a tip bore section (65A) extending from combustion chamber face (24B) for receiving the pre-combustion chamber tip section (63),
a first cooling section (65B) wider in lateral direction than the tip bore section (65A) for forming a pre-combustion chamber cooling ring (33),
a second cooling section (65C) providing a cooling chamber (34) directly contacting an igniter section (50C) of the pre-combustion chamber assembly (50), and
a main mounting section (65D) for receiving the mounting section (50D) of the pre-combustion chamber assembly (50), and
at least one cooling channel (32) fluidly connected to the pre-combustion chamber cooling ring (33).

## Patentansprüche

1. Vorbrennkammereinheit (57) einer Vorbrennkammeranordnung (50) zum Zünden eines Verbrennungsmotors (10), der zumindest teilweise mit gasförmigem Brennstoff betreibbar ist, wobei die Vorbrennkammereinheit (57) eine Hohlform aufweist, die entlang einer Längsachse (53) verlängert ist, um eine Vorbrennkammer (59) bereitzustellen, und Folgendes umfasst:
eine Vorbrennkammerwand (67), welche die Vorbrennkammer (59) begrenzt, wobei die Vorbrennkammerwand (67) Folgendes umfasst
einen Hauptabschnitt (67A), der einen Zündabschnitt (59A) der Vorbrennkammer (59) zumindest teilweise umgibt,
einen Spitzenabschnitt (67B), der einen Vorbrennkammerspitzenabschnitt (63) der Vorbrennkammeranordnung (50) bildet, und
einen Dichtungsabschnitt (67C) zwischen dem Spitzenabschnitt (67B) und dem Hauptabschnitt (67A), um einen Dichtungsbereich (73) im montierten Zustand bereitzustellen,
wobei der Hauptabschnitt (67A) Folgendes umfasst
eine äußere Fluidführungsfläche (81A), die sich in Umfangsrichtung um die Längsachse (53) erstreckt und entlang und in Richtung der Längsachse (53) gekrümmt ist, um ein Kühlfluid sanft umzuleiten, **dadurch gekennzeichnet, dass**
die äußere Fluidführungsfläche (81A) als eine umlaufende Aussparung (81) um die Längsachse (53) herum ausgebildet ist, wobei die Aussparung (81) eine Krümmung umfasst, die auf einer Zündseite und/oder einer Einspritzseite umkehrt, wodurch ein S-artiger Übergang auf der Zündseite und/oder der Einspritzseite gebildet wird, wodurch ein gleichmäßiger Fluss eines Kühlfluids in Richtung der Längsachse (53) gebildet wird.

2. Vorbrennkammereinheit (57) nach Anspruch 1, wobei sich der Dichtungsabschnitt (67C) radial von der Längsachse (53) bis zu einem äußeren Dichtungsradius (Rs) erstreckt und die Aussparung (81) sich hinab zu einem unteren Aussparungsradius (Rr) erstreckt, der kleiner als der äußere Dichtungsradius (Rs) ist.

3. Vorbrennkammereinheit (57) nach Anspruch 1 oder Anspruch 2, wobei insbesondere der Dichtungsabschnitt (67C) eine radial verlaufende ringförmige Dichtfläche (73A) umfasst.

4. Vorbrennkammereinheit (57) nach einem der Ansprüche 1 bis 3, wobei eine axiale Position (Z_{Tmin}) mit einer Mindestwanddicke (Tmin) des Hauptabschnitts (67A) entlang der Längsachse (53) in Bezug auf eine axiale Position (Z_{Rr}) des unteren Aussparungsradius (Rr) axial verschoben ist, insbesondere in Richtung eines Bereichs mit einem größeren Durchmesser des Zündabschnitts (59A) der Vorbrennkammer (59).

5. Vorbrennkammereinheit (57) nach einem der vorstehenden Ansprüche, wobei eine Krümmung der äußeren Fluidführungsfläche (81A) durch eine Folge von Radien definiert ist, die ineinander übergehen und mit zunehmendem Abstand vom Dichtungsabschnitt (67C) größer werden.

6. Vorbrennkammereinheit (57) nach einem der vorstehenden Ansprüche, wobei der Dichtungsabschnitt (67C) durch eine flanschartige Struktur, die aus dem Hauptabschnitt (67A) und dem Dichtungsabschnitt (67C) gebildet ist, bereitgestellt wird.

7. Vorbrennkammereinheit (57) nach einem der vorstehenden Ansprüche, wobei der Vorbrennkammerspitzenabschnitt (63) der Vorbrennkammeranordnung (50) zumindest teilweise einen Einspritzabschnitt (59B) der Vorbrennkammer (59) umgibt und Durchgangslöcher (69) zur fluidischen Verbindung des Einspritzabschnitts (59B) der Vorbrennkammer mit einer Hauptbrennkammer (26) umfasst.

8. Zylinderkopf (24) für einen Verbrennungsmotor (10), der zumindest teilweise mit gasförmigem Brennstoff betreibbar ist, wobei der Zylinderkopf (24) Folgendes umfasst:
eine Montagebohrung (65) zur Montage einer länglichen Vorbrennkammeranordnung (50), die sich entlang einer Längsachse (53) erstreckt, so dass ein Montageabschnitt (50D) der Vorbrennkammeranordnung (50) an einer äußeren Oberseite (24A) des Zylinderkopfes (24) angeordnet ist und ein Vorbrennkammerspitzenabschnitt (63) der Vorbrennkammeranordnung (50) an einer Brennkammerfläche (24B) des Zylinderkopfes (24) angeordnet ist, wobei die Montagebohrung (65) in axialer Richtung eine Folge umfasst von:
einem Spitzenbohrungsabschnitt (65A), der sich von der Brennkammerfläche (24B) erstreckt, um den Vorbrennkammerspitzenabschnitt (63) aufzunehmen,
einem ersten Kühlabschnitt (65B), der in lateraler Richtung breiter als der Spitzenbohrungsabschnitt (65A) ist, um einen Vorbrennkammerkühlring (33) zu bilden,
einem zweiten Kühlabschnitt (65C), der eine Kühlkammer (34) vorsieht, die direkt mit einem Zünderabschnitt (50C) der Vorbrennkammeranordnung (50) in Kontakt steht, und
einem Hauptmontageabschnitt (65D) zur Aufnahme des Montageabschnitts (50D) der Vorbrennkammeranordnung (50), **gekennzeichnet durch**
mindestens einen Kühlkanal (32), der mit dem Vorbrennkammerkühlring (33) über eine kolbenartige Kammer (103), die einen Gratabschnitt (101) zwischen einer Verlängerung des Kühlkanals (32) und des Spitzenbohrungsabschnitts (65A) bildet, fluidisch verbunden ist,
wobei der Gratabschnitt (101) eine gekrümmte Oberfläche (101A) umfasst, die dem Kühlkanal (32) zugewandt ist.

9. Zylinderkopf (24) nach Anspruch 9, wobei die dem Kühlkanal (32) zugewandte gekrümmte Oberfläche (101A) entlang und zur Längsachse (53) hin gekrümmt ist, um ein Kühlfluid sanft umzuleiten, und
wobei sich insbesondere die gekrümmte Oberfläche (101A), zum Beispiel, wenn eine Vorbrennkammeranordnung (50) mit einer Vorbrennkammereinheit (57) nach einem der Ansprüche 1 bis 9 montiert ist, in die äußere Fluidführungsfläche (81A) der Vorbrennkammerwand (67) erstreckt, insbesondere derart, dass die gekrümmte Oberfläche (101A) und eine externe Fluidführungsfläche (81A) der Vorbrennkammereinheit zusammen das Kühlfluid sanft umleiten.

10. Zylinderkopf (24) nach Anspruch 8 oder Anspruch 9, wobei an dem Übergang zwischen dem Spitzenbohrungsabschnitt (65A) und dem ersten Kühlabschnitt (65B) eine umlaufende Gegendichtfläche (91) vorgesehen ist, wobei die Gegendichtfläche (91) in einer axialen Position (Zs) angeordnet ist, die weiter von der Brennkammerfläche (24B) entfernt ist als eine axiale Position (Zc) des Zentrums der Öffnung (32A) und insbesondere als eine axiale Position (Zw) eines Wandabschnitts der Öffnung (32A), die der Brennkammerfläche (24B) am nächsten ist.

11. Zylinderkopfeinheit Folgendes umfassend:
eine Vorbrennkammeranordnung (50) mit einer Vorbrennkammereinheit (57) nach einem der Ansprüche 1 bis 7; und
einen Zylinderkopf (24) nach einem der Ansprüche 8 bis 10, oder
einen Zylinderkopf (24) für einen Verbrennungsmotor (10), der zumindest teilweise mit gasförmigem Brennstoff betreibbar ist, wobei der Zylinderkopf (24) Folgendes umfasst:
eine Montagebohrung (65) zur Montage einer länglichen Vorbrennkammeranordnung (50), die sich entlang einer Längsachse (53) erstreckt, so dass ein Montageabschnitt (50D) der Vorbrennkammeranordnung (50) an einer äußeren Oberseite (24A) des Zylinderkopfes (24) angeordnet ist und ein Vorbrennkammerspitzenabschnitt (63) der Vorbrennkammeranordnung (50) an einer Brennkammerfläche (24B) des Zylinderkopfes (24) angeordnet ist, wobei die Montagebohrung (65) in axialer Richtung eine Folge umfasst von:
einem Spitzenbohrungsabschnitt (65A), der sich von der Brennkammerfläche (24B) erstreckt, um den Vorbrennkammerspitzenabschnitt (63) aufzunehmen,
einem ersten Kühlabschnitt (65B), der in lateraler Richtung breiter als der Spitzenbohrungsabschnitt (65A) ist, um einen Vorbrennkammerkühlring (33) zu bilden,
einem zweiten Kühlabschnitt (65C), der eine Kühlkammer (34) vorsieht, die direkt mit einem Zünderabschnitt (50C) der Vorbrennkammeranordnung (50) in Kontakt steht, und
einem Hauptmontageabschnitt (65D) zur Aufnahme des Montageabschnitts (50D) der Vorbrennkammeranordnung (50), und
mindestens einem Kühlkanal (32), der mit dem Vorbrennkammerkühlring (33) fluidisch verbunden ist.

## Revendications

1. Unité de préchambre de combustion (57) d'un ensemble de préchambre de combustion (50) pour allumer un moteur à combustion interne (10) qui peut fonctionner au moins en partie sur du combustible gazeux, dans laquelle l'unité de préchambre de combustion (57) a une forme creuse allongée le long d'un axe longitudinal (53) pour fournir une préchambre de combustion (59) et comprend :
une paroi de préchambre de combustion (67) délimitant la préchambre de combustion (59), la paroi de préchambre de combustion (67) comprenant :
une section principale (67A) entourant au moins partiellement une partie d'allumage (59A) de la préchambre de combustion (59),
une section de pointe (67B) formant une section de pointe de préchambre de combustion (63) de l'ensemble de préchambre de combustion (50), et
une section d'étanchéité (67C) entre la section de pointe (67B) et la section principale (67A) pour fournir une région d'étanchéité (73) à l'état monté,
dans laquelle la section principale (67A) comprend :
une surface de guidage de fluide externe (81A) s'étendant circonférentiellement autour de l'axe longitudinal (53) et incurvée le long de l'axe longitudinal (53) et vers celui-ci pour rediriger de manière uniforme un fluide de refroidissement,
**caractérisée en ce que** la surface de guidage de fluide externe (81A) est configurée sous la forme d'un évidement circonférentiel (81) autour de l'axe longitudinal (53),
l'évidement (81) comprenant une courbure qui s'inverse sur un côté d'allumage et/ou sur un côté d'injection, formant de la sorte une transition en forme de S sur le côté d'allumage et/ou sur le côté d'injection, formant de la sorte un écoulement uniforme d'un fluide de refroidissement dans la direction de l'axe longitudinal (53).

2. Unité de préchambre de combustion (57) selon la revendication 1, dans laquelle la section d'étanchéité (67C) s'étend radialement de l'axe longitudinal (53) vers le haut jusqu'à un rayon d'étanchéité externe (Rs) et l'évidement (81) s'étend vers le bas jusqu'à un rayon d'évidement inférieur (Rr) qui est plus petit que le rayon d'étanchéité externe (Rs).

3. Unité de préchambre de combustion (57) selon la revendication 1 ou la revendication 2, dans laquelle, en particulier, la section d'étanchéité (67C) comprend une face d'étanchéité de forme annulaire (73A) s'étendant radialement.

4. Unité de préchambre de combustion (57) selon l'une quelconque de la revendication 1 à la revendication 3, dans laquelle une position axiale (Z_{Tmin}) d'une épaisseur de paroi minimale (Tmin) de la section principale (67A) est déplacée axialement le long de l'axe longitudinal (53) par rapport à une position axiale (Z_{Rr}) du rayon d'évidement inférieur (Rr), en particulier vers une région d'un plus grand diamètre de la partie d'allumage (59A) de la préchambre de combustion (59).

5. Unité de préchambre de combustion (57) selon l'une quelconque des revendications précédentes, dans laquelle une courbure de la surface de guidage de fluide externe (81A) est définie par une séquence de rayons qui se fondent l'un dans l'autre et augmentent de taille à mesure que la distance à la section d'étanchéité (67C) augmente.

6. Unité de préchambre de combustion (57) selon l'une quelconque des revendications précédentes, dans laquelle la section d'étanchéité (67C) est fournie par une structure en forme de bride formée par la section principale (67A) et la section d'étanchéité (67C).

7. Unité de préchambre de combustion (57) selon l'une quelconque des revendications précédentes, dans laquelle la section de pointe (63) de la préchambre de combustion de l'ensemble de préchambre de combustion (50) entoure au moins partiellement une partie d'injection (59B) de la préchambre de combustion (59) et comprend des trous traversants (69) pour raccorder en communication fluidique la partie d'injection (59B) de la préchambre de combustion à une chambre de combustion principale (26).

8. Tête de cylindre (24) pour un moteur à combustion interne (10) qui peut fonctionner au moins en partie sur du combustible gazeux, la tête de cylindre (24) comprenant :
un alésage de montage (65) pour monter un ensemble de préchambre de combustion allongé (50) qui s'étend le long d'un axe longitudinal (53) de sorte qu'une section de montage (50D) de l'ensemble de préchambre de combustion (50) soit positionnée sur une surface supérieure externe (24A) de la tête de cylindre (24) et qu'une section de pointe (63) de la préchambre de combustion de l'ensemble de préchambre de combustion (50) soit positionnée sur une face (24B) de la chambre de combustion de la tête de cylindre (24), l'alésage de montage (65) comprenant dans la direction axiale une séquence des sections suivantes :
une section d'alésage de pointe (65A) s'étendant de la face (24B) de la chambre de combustion pour recevoir la section de pointe (63) de la préchambre de combustion,
une première section de refroidissement (65B) plus large en direction latérale que la section d'alésage de pointe (65A) pour former un anneau de refroidissement (33) de la préchambre de combustion,
une seconde section de refroidissement (65C) fournissant une chambre de refroidissement (34) venant en contact direct avec une section d'allumage (50C) de l'ensemble de préchambre de combustion (50), et
une section de montage principale (65D) pour recevoir la section de montage (50D) de l'ensemble de préchambre de combustion (50), **caractérisée en ce que** :
au moins un canal de refroidissement (32) raccordé en communication fluidique à l'anneau de refroidissement (33) de la préchambre de combustion via une chambre en forme de bulbe (103) formant une section nervurée (101) entre un allongement du canal de refroidissement (32) et la section d'alésage de pointe (65A),
dans laquelle la section nervurée (101) comprend une surface incurvée (101A) en regard du canal de refroidissement (32).

9. Tête de cylindre (24) selon la revendication 9, dans laquelle la surface incurvée (101A) en regard du canal de refroidissement (32) est incurvée le long de l'axe longitudinal (53) et vers celui-ci pour rediriger uniformément un fluide de refroidissement et,
dans laquelle, en particulier, la surface incurvée (101A) s'étend, par exemple lorsqu'un ensemble de préchambre de combustion (50) avec une unité de préchambre de combustion (57) selon l'une quelconque de la revendication 1 à la revendication 9 est monté, dans la surface de guidage de fluide externe (81A) de la paroi (67) de la préchambre de combustion, en particulier de sorte que la surface incurvée (101A) et une surface de guidage de fluide externe (81A) de l'unité de préchambre de combustion redirigent conjointement de manière uniforme le fluide de refroidissement.

10. Tête de cylindre (24) selon la revendication 8 ou la revendication 9, dans laquelle une face de contre-étanchéité circonférentielle (91) est disposée dans la transition comprise entre la section d'alésage de pointe (65A) et la première section de refroidissement (65B), la face de contre-étanchéité (91) étant positionnée dans une position axiale (Zs) qui est plus éloignée de la face (24B) de la chambre de combustion qu'une position axiale (Zc) du centre de l'ouverture (32A) et, en particulier, qu'une position axiale (Zw) d'une section de paroi de l'ouverture (32A) qui est la plus proche de la face (24B) de la chambre de combustion.

11. Unité de tête de cylindre comprenant :
un ensemble de préchambre de combustion (50) avec une unité de préchambre de combustion (57) selon l'une quelconque de la revendication 1 à la revendication 7 ;
et
une tête de cylindre (24) selon l'une quelconque de la revendication 8 à la revendication 10 ou
une tête de cylindre (24) pour un moteur à combustion interne (10) qui peut fonctionner au moins partiellement sur du combustible gazeux, la tête de cylindre (24) comprenant :
un alésage de montage (65) pour monter un ensemble de préchambre de combustion allongé (50) qui s'étend le long d'un axe longitudinal (53) de sorte qu'une section de montage (50D) de l'ensemble de préchambre de combustion (50) soit positionnée sur une surface supérieure externe (24A) de la tête de cylindre (24) et qu'une section de pointe de préchambre de combustion (63) de l'ensemble de préchambre de combustion (50) soit positionnée sur une face de chambre de combustion (24B) de la tête de cylindre (24), l'alésage de montage (65) comprenant en direction axiale une séquence de sections suivantes :
une section d'alésage de pointe (65A) s'étendant de la face (24B) de la chambre de combustion pour recevoir la section de pointe (63) de la préchambre de combustion,
une première section de refroidissement (65B) plus large en direction latérale que la section d'alésage de pointe (65A) pour former un anneau de refroidissement de préchambre de combustion (33),
une seconde section de refroidissement (65C) fournissant une chambre de refroidissement (34) qui vient en contact direct avec une section d'allumage (50C) de l'ensemble de préchambre de combustion (50), et
une section de montage principale (65D) pour recevoir la section de montage (50D) de l'ensemble de préchambre de combustion (50) et
au moins un canal de refroidissement (32) raccordé en communication fluidique à l'anneau de refroidissement (33) de la préchambre de combustion.
